# EUROPÄISCHE PATENTSCHRIFT

(11) **EP 1 921 959 B1**
(45) Veröffentlichungstag und Bekanntmachung des Hinweises auf die Patenterteilung: **09.12.2009**
(21) Anmeldenummer: 06792837.4
(22) Anmeldetag: 16.08.2006
(51) Int. Cl.: A47J 43/07

(54) **KÜCHENGERÄT MIT SICHERHEITSSYSTEM UND VERFAHREN ZUM BETREIBEN EINES KÜCHENGERÄTS**
KITCHEN APPLIANCE COMPRISING A SAFETY SYSTEM AND METHOD FOR OPERATING A KITCHEN APPLIANCE
APPAREIL DE CUISINE POURVU D'UN SYSTEME DE SECURITE, ET PROCEDE POUR FAIRE FONCTIONNER CET APPAREIL DE CUISINE

(30) Priorität: 26.08.2005 DE 102005040525
(43) Veröffentlichungstag der Anmeldung: 21.05.2008
(73) Patentinhaber: BSH Bosch und Siemens Hausgeräte GmbH, 81739 München (DE)
(72) Erfinder: KOVACIC, Peter, 3303 Gomilsko (SI); MAK, Marjan, 3309 Gomilsko (SI); PESEC, Jurij, 3301 Petrovce (SI); RUDEZ, Darko, 3230 Sentjur (SI)
(86) Internationale Anmeldenummer: PCT/EP2006/065356
(87) Internationale Veröffentlichungsnummer: WO 2007/023121

(56) Entgegenhaltungen:
- EP-A1- 0 120 496
- EP-A1- 0 440 051
- DE-C1- 4 317 309

## Beschreibung

Die Erfindung betrifft ein Küchengerät, insbesondere ein elektromotorisches Küchengerät, vorzugsweise eine elektromotorische Solo- oder Universalküchenmaschine, umfassend einen Einschalter und eine dem Einschalter zugeordnete Sicherheitsverriegelung, die nur dann den Einschalter entriegelt und einen Betrieb des Küchengerätes zulässt, wenn das Küchengerät ordnungsgemäß zusammengebaut ist.

DE 691 01 451 C1 betrifft ein elektrisches Küchengerät mit mehreren Funktionen zum Bearbeiten von Lebensmitteln, welches ein Gehäuse aufweist. Ein Bereich des Gehäuses bildet einen Sockel zur Aufnahme von verschiedenen Zubehörteilen, welche eine Arbeitsschüssel mit einem Deckel aufweisen, in der sich ein Werkzeug dreht. Das Werkzeug kann beispielsweise ein Hackmesser, ein Gemüseschneider oder eine Saft-Zentrifuge kann und wird durch eine im Boden der Schüssel ausgebildete Öffnung durch die Abtriebswelle eines Motors angetrieben. Das Gerät weist eine elektrische Steuervorrichtung zum Einschalten des Motors auf, welche eine Detektor-Vorrichtung zur Feststellung der Anwesenheit des Deckels auf der Arbeitsschüssel aufweist, welche die Steuervorrichtung in eine aktive Stellung bringen kann, in welcher das Einschalten des Motors zugelassen wird, wenn der Deckel in seine richtige Schließstellung auf der Arbeitsschüssel gebracht ist. Weiter weist die Steuervorrichtung einen Geschwindigkeitsregler auf, der zur Einstellung der Umdrehungsgeschwindigkeit der Antriebswelle in Abhängigkeit des verwendeten Werkzeugs bestimmt ist. Die Detektorvorrichtung weist zur Feststellung der Anwesenheit einer Arbeitsschüssel bzw. eines Deckels einen Hall-Sensor auf, mit dem das Magnetfeld eines Magneten erfasst werden kann.

Aus der DE 31 21 252 ist ein Mehrzweck-Haushaltsgerät mit einer Anzahl austauschbarer Nahrungsmittel-Zubereitungswerkzeuge und einer abnehmbaren Schale bekannt, welches eine magnetisch wirkende Sicherheitsblockierung umfasst, mit der eine ordnungsgemäße Positionierung der Schale in dem Haushaltsgerät überwacht werden kann. Hierbei werden Fehler der magnetischen Blockiervorrichtung vermieden, indem alternierende magnetische Flüsse verwendet werden.

Die EP 0 120 490 A1 offenbart ein mehrteiliges Elektrogerät mit einer magnetischen Sicherheitseinrichtung. Die DE 43 17 309 beschreibt eine Vorrichtung zur elektromagnetischen Verriegelung eines Werkzeugs, welches von einer Antriebseinheit angetrieben wird. Schließlich offenbart die EP 0 440 051 A1 ebenfalls ein Küchengerät, welches mit unterschiedlichen Drehzahlen eines Elektromotors angetrieben werden kann.

Aufgabe der vorliegenden Erfindung ist es, ein Küchengerät, insbesondere ein elektromotorisches Küchengerät, bzw. ein Verfahren zum Betreiben eines Küchengerätes bereitzustellen, wobei mit einfachen Mitteln ein hohes Maß an Sicherheit während des Betriebs des Küchengeräts gewährleistet wird.

Diese Aufgabe wird erfindungsgemäß gelöst durch ein Küchengerät bzw. ein Verfahren zum Betreiben eines Küchengerätes wie in den unabhängigen Ansprüchen angegeben. Weitere vorteilhafte Ausgestaltungen und Weiterbildungen, die jeweils einzeln angewandt oder beliebig miteinander kombiniert werden können, sind Gegenstand der jeweils abhängigen Ansprüche.

Das erfindungsgemäße Küchengerät, insbesondere elektromotorische Küchengerät, vorzugsweise elektromotorische Solo- oder Universalküchenmaschine, umfasst einen Einschalter und eine dem Einschalter zugeordnete Sicherheitsverriegelung, die nur dann den Einschalter entriegelt und einen Betrieb des Küchengeräts zulässt, wenn das Küchengerät ordnungsgemäß zusammengebaut ist, und ist **dadurch gekennzeichnet, dass** die Sicherheitsverriegelung mindestens vier, vorzugsweise sechs, separate Magnetschalter mit Magnetsensoren aufweist.

In das Küchengerät können beispielsweise ein Pürier-, Misch-, Häcksel-, Knet- und/oder Schneidwerk, ein Schlag- bzw. Rührbesen, ein Getränkemixer, ein Durchlaufschnitzler, eine Getreidemühle, eine Zitrus- bzw. Fruchtpresse und/oder ein Fleischwolf als Werkzeug eingesetzt werden. Hierfür weist das Küchengerät insbesondere mehrere Aufnahmen für die verschiedenen Werkzeuge auf.
Mit Hilfe der Sicherheitsverriegelung wird gewährleistet, dass ein Betrieb des Küchengeräts nur dann möglich ist, wenn mit Hilfe der Magnetschalter sichergestellt ist, dass das Gerät ordnungsgemäß zusammengesetzt ist bzw. ein Werkzeug ordnungsgemäß mit dem Küchengerät verbunden ist. Erst wenn alle Magnetschalter jeweils ein Signal geben, welches dem Zustand "ordnungsgemäß zusammengesetzt" entspricht, kann die Sicherheitsverriegelung den Einschalter entriegeln. Logisch entspricht dieses einer UND- Verkettung der Schalter und kann schaltungstechnisch durch eine Serienschaltung realisiert werden. Die Sicher - heitsverriegelung weist Magnetsensoren auf, mit denen eine ordnungsgemäße Verbindung bzw. ein ordnungsgemäßer Zusammenbau des Küchengeräts erfasst wird. Die Magnetsensoren sind insbesondere Reed-Sensoren.

In einer Modifikation der Erfindung können auch Hall-Sensoren als Magnetsensoren verwendet werden.

Die Magnetschalter können insbesondere separat voneinander in der Weise arbeiten, dass sie räumlich wie auch elektrisch unabhängig voneinander schalten. Die Sensoren können beispielsweise räumlich und/oder schaltungstechnisch separat voneinander angeordnet sein und separat wirken. Die Sensoren dienen zur Überwachung des ordnungsgemäßen Zusammenbaus des Küchengeräts bzw. der ordnungsgemäßen Verbindung des Küchengeräts mit einem Werkzeug. Gibt einer der Mehrzahl an Magnetschalter ein Signal an die Sicherheitsverriegelung, dass das Küchengerät nicht ordnungsgemäß zusammengebaut ist, wird der Einschalter des Küchengeräts nicht entriegelt und das Küchengerät kann nicht in Betrieb genommen werden. Mit Hilfe der durch die Sicherheitsverriegelung bewirkten Blockierung des Einschalters kann ein hohes Maß an Sicherheit bei dem Betrieb des Küchengeräts erlangt werden, indem die Magnetschalter bzw. die Magnetsensoren räumlich bzw. funktional an den Stellen am Küchengerät positioniert werden, von denen ein Gefährdungsrisiko ausgeht.

Das erfindungsgemäße Küchengerät kann mindestens einen Magnetschalter mit mindestens einem Magnetsensor, der ein Reed-Sensor ist, umfassen. Reed-Sensoren sind magnetisch wirkende Sensoren, bei denen ein elektrischer Schalter durch die Anwesenheit bzw. Abwesenheit eines Magneten betätigt wird, sobald der Magnet aus dem von dem Sensor erfassten Raumbereich entfernt bzw. in den von dem Sensor erfassten Raumbereich eingebracht wird. Reed-Kontakte weisen vergleichsweise kleine Abmaße auf und ermöglichen eine berührungslose Arbeitsweise, sind preiswert und arbeiten sehr zuverlässig. Reed-Sensoren schließen beispielsweise einen elektrischen Kontakt, sobald eine Magnetfeldstärke in ihrem Sensorbereich einen bestimmten Wert überschreitet. Dabei können Fehlbedienungen des Magnetschalters nahezu ausgeschlossen werden. Dafür wird insbesondere der Reed-Sensor so angeordnet, dass ein unerwünschter Einfluss externer Magnetfelder, wie z.B. der im Hausgebrauch verwendeten Magneten (beispielsweise Magnete einer Magnetpinwand), vermieden wird. Beispielsweise wird ein Magnetsensor in einer Vertiefung am Gehäuse des Küchengeräts angeordnet, in welche zwar der Magnet des Magnetschalters eindringen kann, jedoch übliche im Haushalt verwendete Magnete nicht hineinpassen, so dass sie stets hinreichend entfernt von dem Magnetsensor bleiben.

Ein Reed-Sensor bzw. Reed-Schalter besteht in der Regel aus zwei Kontaktzungen aus ferromagnetischem Material, die unter inerter Atmosphäre (z.B. Stickstoff oder Edelgase) hermetisch dicht in ein Glasrohr eingeschmolzen werden. Nach dem Einschmelzen überlappen sich die Kontaktzungen innerhalb des Glaskörpers und bilden im Kontaktbereich einen Gasspalt. Beide Zungen können in der Kontaktzone im Kontaktmaterial beschichtet sein (z.B. Rodium, Rothenium usw.). Bei Annäherung eines ausreichend starken Magnetfeldes nehmen beide Kontaktzungen eine entgegengesetzte magnetische Polarität an und schließen dadurch den Kontakt. Die Vorteile von Reed-Sensoren sind, dass berührungslos geschaltet werden kann, sie preisgünstig herstellbar sind, keine Stromversorgung benötigen und (von Ausnahmen, wie z.B. Wolframkontakten abgesehen) keinen Minimalstrom erfordern. Sie weisen in der Regel eine sehr zuverlässige Kontaktgabe, einen niedrigen Übergangswiderstand (0.07 bis 0.2 Ohm im Neuzustand) und eine hohe Lebensdauer von mehreren 100 Millionen bis über eine Milliarde Schaltspiele bei Signallast auf. Da sie hermetisch dicht abgeschlossen sind, können sie auch bedenkenlos im Haushalt und auch in Verwendung mit Lebensmitteln verwendet werden. Grundsätzlich wird unter Schließkontakten (SPST-NO für Single Pole Single Throw - normally open), Öffnerkontakten (SPST-NC, d. h. Single Pole Single Throw - normally closed) Umschaltkontakten (SPDT-Single Pole Double Throw) und distabilen Kontakten unterschieden.

Das Küchengerät weist insbesondere mindestens einen ansteckbaren Mixerbehälter auf, der mit einer ersten Werkzeugkupplung mit dem Küchengerät verbindbar ist, wobei an der ersten Werkzeugkupplung ein erster Magnetsensor für die Überwachung einer ordnungsgemäßen Verbindung des Mixerbehälters mit dem Küchengerät vorgesehen ist. Der Mixerbehälter kann als Mixerschale ausgestaltet sein. Er wird mit der ersten Werkzeugkupplung an dem Küchengerät befestigt, wobei vorzugsweise ein an dem Küchengerät ansteckbares Werkzeug in den Mixerbehälter eingeführt wird. Mit Hilfe des ersten Magnetsensors wird sichergestellt, dass der ansteckbare Mixerbehälter ordnungsgemäß mit dem Küchengerät verbunden ist.

In einer weiteren vorteilhaften Ausgestaltung weist der Mixerbehälter einen Behälterdeckel auf, und ein zweiter Magnetsensor ist für die Überwachung eines ordnungsgemäßen Schließens des Mixerbehälters mit dem Behälterdeckel vorgesehen. Mit Hilfe des zweiten Magnetsensors wird somit erfasst, ob der Mixerbehälter mit dem Behälterdeckel ordnungsgemäß verschlossen ist. Dieses kann insbesondere dann vorteilhaft sein, wenn ein Werkzeug an dem Küchengerät befestigt ist, welches in dem Mixerbehälter arbeitet, wie z.B. ein Schneidwerk, und ein Gefahrenpotential von dem in Betrieb befindlichen Werkzeug ausgeht, wenn der Mixerbehälter nicht vollständig und ordnungsgemäß mit dem Behälterdeckel geschlossen ist.

Vorteilhafterweise ist der zweite Magnetsensor an der ersten Werkzeugkupplung, vorzugsweise am Küchengerät, angeordnet, wobei insbesondere an dem Mixerbehälter, insbesondere in einem an dem Mixerbehälter vorgesehenen Behältergriff, ein zwischen einer ersten Position und einer zweiten Position hin- und her bewegliches Gestänge, insbesondere eine Koppelstange, vorgesehen ist, welches derart mit dem Behälterdeckel in Eingriff gelangt, dass das Gestänge bei ordnungsgemäß geschlossenem Behälterdeckel die erste Position und sonst die zweite Position einnimmt, wobei mit Hilfe des Gestänges der zweite Magnetsensor betätigbar ist. Mit Hilfe des Gestänges wird somit der zweite Magnetsensor betätigt, der räumlich von dem Behälterdeckel entfernt sein kann. Dieses ist insbesondere dann von Vorteil, wenn an dem Mixerbehälter selber kein Magnetsensor befestigt werden kann, bzw. befestigt werden soll, da eine elektrische Kontaktierung des Magnetsensors mit dem Küchengerät schwierig, kompliziert oder störanfällig ist. Mit Hilfe des Gestänges wird die Information darüber, ob der Mixerbehälter ordnungsgemäß verschlossen ist oder nicht, mechanisch an die erste Werkzeugkupplung weitergeleitet an der der zweite Magnetsensor küchengerätseitig befestigt ist.

In einer weiteren vorteilhaften Ausgestaltung weist das Küchengerät mindestens ein ansteckbares erstes Werkzeug, insbesondere ein Pürier-, Misch-, Häcksel-, Knet- und/oder Schneidwerk, Schlag- bzw. Rührbesen, Getränkemixer, Durchlaufschnitt, Getreidemühle, Zitrus- bzw. Fruchtpresse und/oder Fleischwolf auf, wobei das Werkzeug mit einer zweiten Werkzeugkupplung mit dem Küchengerät verbindbar ist, wobei an der zweiten Werkzeugkupplung ein dritter Magnetsensor für die Überwachung einer ordnungsgemäßen Verbindung des ersten Werkzeugs mit dem Küchengerät vorgesehen ist. Das Küchengerät weist insbesondere mehrere Werkzeugkupplungen auf, um die jeweiligen Werkzeuge in einer entsprechenden Position halten zu können. Beispielsweise wird ein Pürierwerk von dem Küchengerät von oben gehalten, während ein Getränkemixer auf das Küchengerät aufgesteckt wird und von unten gehalten wird. Eine Getreidemühle oder ein Fleischwolf kann seitlich gehalten werden, wobei hierbei entsprechend langsame Umdrehungsgeschwindigkeiten vorliegen sollen. Mit Hilfe der entsprechenden Werkzeugkupplungen können die jeweiligen Werkzeuge sicher gehalten werden. Ein entsprechender Magnetsensor, d.h. für die zweite Werkzeugkupplung ein dritter Magnetsensor, dient für die Überwachung einer ordnungsgemäßen Verbindung des Werkzeugs mit dem Küchengerät.

In einer weiteren Ausgestaltung der Erfindung weist das Küchengerät mindestens ein ansteckbares zweites Werkzeug, insbesondere ein Pürier-, Misch-, Häcksel-, Knet- und/oder Schneidwerk, Schlag- bzw. Rührbesen, Getränkemixer, Durchlaufschnitzler, Getreidemühle, Zitrus- bzw. Fruchtpresse und/oder Fleischwolf, auf, das mit einer dritten Werkzeugkupplung mit dem Küchengerät verbindbar ist, wobei an der dritten Werkzeugkupplung ein vierter Magnetsensor für die Überwachung einer ordnungsgemäßen Verbindung des zweiten Werkzeugs mit dem Küchengerät vorgesehen ist.

Durch eine Vielzahl der verwendbaren und ansteckbaren Werkzeuge kann das Küchengerät in vielfältiger Weise eingesetzt und verwendet werden. Mit Hilfe der Magnetsensoren wird eine ordnungsgemäße Verbindung zwischen dem jeweiligen Werkzeug und dem Küchengerät überwacht. Die Magnetsensoren können jedoch auch dafür verwendet werden, um festzustellen, welches Werkzeug, insbesondere welcher Werkzeugtyp, in das Küchengerät eingesetzt bzw. angesteckt ist. Durch die Erkennung, welches Werkzeug mit dem Küchengerät verbunden ist, kann das Küchengerät, insbesondere ein Elektromotor im Küchengerät, entsprechend angesteuert werden. Hierbei kann je nach Art des verwendeten Werkzeugs eine entsprechende Geschwindigkeitsstufe bzw. Leistungsstufe des Elektromotors vorgegeben werden.

Vorteilhafterweise weist das Küchengerät mehrere, insbesondere mindestens drei, Werkzeugkupplungen für verschiedene Werkzeuge, insbesondere Pürier-, Misch-, Häcksel-, Knet- und/oder Schneidwerke, Mixerbehälter und/oder Fleischwolf, auf, wobei insbesondere jeder Werkzeugkupplung mindestens ein Magnetsensor zugeordnet ist. In einer speziellen Ausgestaltung der Erfindung kann mindestens ein Magnetsensor, können insbesondere mindestens zwei, vorteilhafterweise ein überwiegender Anteil der, Magnetsensoren den Typ des eingesetzten Werkzeugs identifizieren. Das Küchengerät umfasst insbesondere eine Gerätesteuerung, welche die Betriebsweise des Küchengeräts, insbesondere die Geschwindigkeits- und/oder Leistungsstufe eines Elektromotors, entsprechend der Identifizierung beeinflusst. Beispielsweise ist für einen Fleischwolf oder eine Getreidemühle eine vergleichsweise langsame Geschwindigkeit zu wählen, während für einen Rührbesen höhere Geschwindigkeiten vorteilhaft sind.

Das Küchengerät weist insbesondere ein Gerätegehäuse und einen Gerätegehäusedeckel auf und es ist ein fünfter Magnetsensor für die Bewachung eines ordnungsgemäßen Schließens des Gerätegehäuses mit dem Gerätegehäusedeckel vorgesehen. Mit dem Magnetsensor kann somit festgestellt werden, ob der Gerätegehäusedeckel richtig auf dem Gerätegehäuse sitzt.

Vorteilhafterweise sind die Magnetschalter bzw. die Magnetsensoren so beschaffen und/oder so angeordnet, dass ein Magnetschalter erst dann betätigt wird, wenn eine von diesen Magnetschaltern zu überwachende Schnittstelle vollständig funktionstüchtig bzw. abgesichert ist. Beispielsweise kann eine Freigabe bzw. Entsicherung der Sicherheitsverriegelung erst dann erfolgen, wenn das Werkzeug vollständig von der Werkzeugaufnahme entfernt ist bzw. erst dann erfolgen, wenn das Werkzeug vollständig in das Küchengerät eingesetzt ist. Hierbei wird die Verriegelung beispielsweise so eingestellt, dass ein Betätigen des Einschalters des Küchengerätes erst dann erfolgen kann, wenn im Wesentlichen vollständig sichergestellt ist, dass keine Verletzungsgefahr mehr für den Benutzer des Küchengeräts besteht.

In einer besonders vorteilhaften Ausgestaltung der Erfindung weist der Magnetschalter zur Reduzierung von Störeinflüssen durch externe Magnete eine Vertiefung auf, in der der Magnetsensor angeordnet ist und in die ein Magnet des Magnetschalters eingreifen kann. Hierdurch wird bewirkt, dass externe Magneten, die zahlreich in einem Haushalt verwendet werden (z.B. Magneten einer magnetischen Pinwand) nicht den Magnetschalter beeinflussen können, da sie nicht in die Vertiefung hineinpassen und somit auf Abstand von dem Magnetsensor gehalten werden. Mit Hilfe der Vertiefung wird sichergestellt, dass externe Magneten weit genug von dem Magnetsensor beabstandet sind, so dass das von den externen Magneten erzeugte Magnetfeld am Ort des Magnetsensors hinreichend klein ist und keine Entriegelung des Einschalters bewirkt werden kann. Hierdurch wird die Zuverlässigkeit und Sicherheit des Küchengeräts weiter gesteigert.

In einer besonders vorteilhaften Ausgestaltung der Erfindung wird ein Küchengerät, insbesondere elektromotorisches Küchengerät, vorzugsweise elektromotorische Solo- oder Universalküchenmaschine offenbart. Das Küchengerät ist für mehrere einsetzbare Werkzeuge, insbesondere einen Mixerbehälter, Pürier-, Misch-, Häcksel-, Knet- und/oder Schneidwerke, Schlag- bzw. Rührbesen, Getränkemixer, Durchlaufschnitzler, Gertreidemühle, Zitrus- bzw. Fruchtpressen und/oder Fleischwolf, eingerichtet, wobei eines der Werkzeuge von dem Küchengerät aufnehmbar ist und mit Hilfe mindestens eines Sensors, insbesondere mit Hilfe eines Magnetsensors, der Werkzeugtyp des eingesetzten Werkzeugs identifizierbar ist und die Betriebsweise des Küchengeräts, insbesondere die Geschwindigkeit und/oder Leistungsstufe eines Elektromotors, entsprechend der Identifizierung beeinflussbar**,** insbesondere anpassbar, ist. Hierbei kann der Magnetsensor ein Reed-Sensor sein.

Vorteilhafterweise kann ein Werkzeug sicher und zuverlässig erkannt werden und mit der richtigen Leistungs- bzw. Geschwindigkeitsstufe betrieben werden. Hierbei ist eine Verwendung von Reed-Sensoren besonders vorteilhaft. Reed-Sensoren haben sich als besonders robust herausgestellt und sind vergleichsweise störunanfällig gegenüber den üblicherweise in einem Haushalt vorhandenen Kleinmagneten.

Weitere vorteilhafte Einzelheiten und Ausgestaltungen, die jeweils angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
Fig. 1 ein erfindungsgemäßes Küchengerät in einer perspektivischen Schrägansicht seitlich von oben,
Fig. 2 einen in ein erfindungsgemäßes Küchengerät eingesetzten Mixerbehälter des erfindungsgemäßen Küchengeräts im Längsschnitt mit eingesetztem Behälterdeckel; und
Fig. 3 einen in ein erfindungsgemäßes Küchengerät eingesetzten Mixerbehälter im Längsschnitt ohne eingesetztem Behälterdeckel.

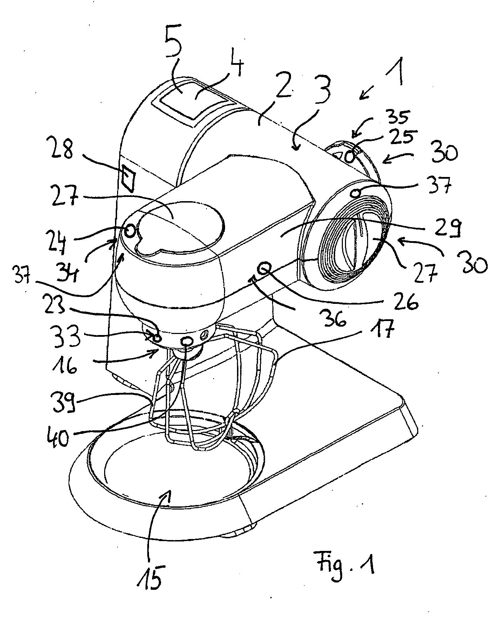

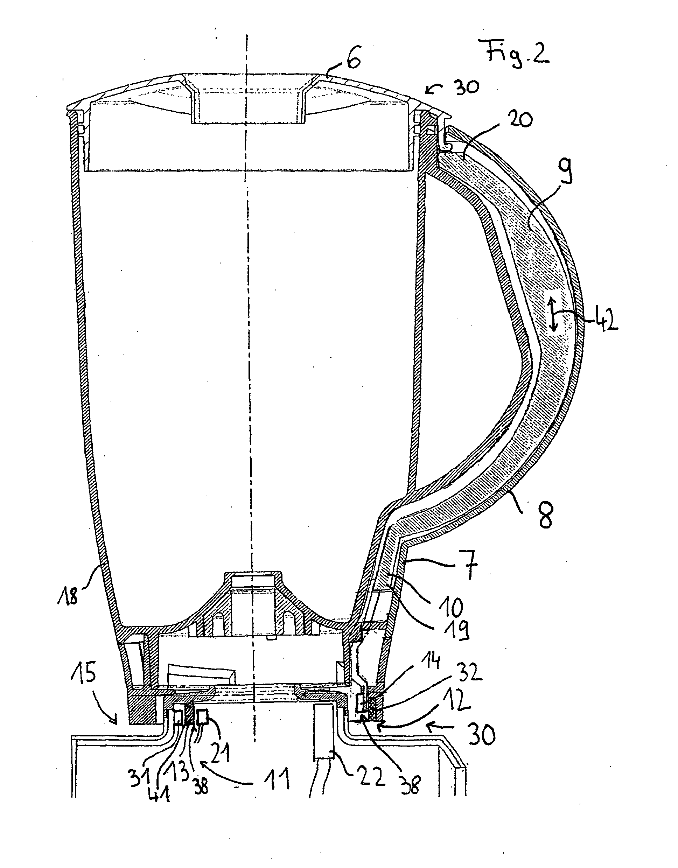

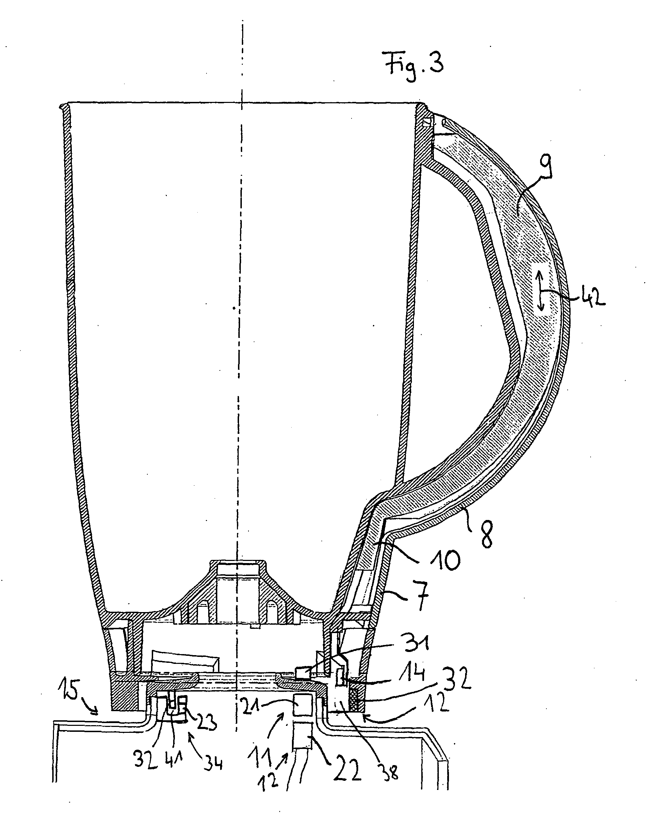

Fig. 1 zeigt ein erfindungsgemäßes Küchengerät 1 mit einem Gerätegehäuse 2, welches einen Elektromotor 3 aufweist, der mit einem Einschalter 4 eingeschaltet werden kann. Der Einschalter 4 ist erst dann wirksam bzw. erst dann aktivierbar, wenn er durch eine Sicherheitsverriegelung 5 freigegeben ist. Mit Hilfe der Sicherheitsverriegelung 5 wird sichergestellt, dass ein z.B. als Rührbesen 39 ausgestaltetes erstes Werkzeug 17 bzw. ein z.B. als Mixerbehälter 7 ausgestaltetes zweites Werkzeug 18 (siehe Fig. 2 und 3) ordnungsgemäß in das Küchengerät 1 eingesetzt ist. Mit der Sicherheitsverriegelung 5 wird auch sichergestellt, dass ein Behälterdeckel 6 für den Mixerbehälter 7 (s. Fig. 2 und 3) ordnungsgemäß verschlossen ist. Nachdem die Sicherheitsverriegelung 5 erkannt hat, dass das Küchengerät 1 vollständig zusammengebaut wurde bzw. die Werkzeuge 17, 18 ordnungsgemäß angeschlossen wurden, wird der Einschalter 4 aktiviert, so dass erst zu diesem Zeitpunkt der Elektromotor 3 bzw. das Küchengerät 1 in Betrieb genommen werden kann. Hierdurch wird die Sicherheit bei der Verwendung des Küchengeräts 1 erheblich gesteigert. Das Küchengerät 1 weist eine erste 15, zweite 16 und eine dritte 27 Werkzeugkupplung auf, welche von entsprechenden Magnetsensoren 21-26 (s. a. Fig. 2 und 3) überwacht werden. Beispielsweise wird die zweite Werkzeugkupplung 16 mit Hilfe eines dritten Magnetschalters 33, der einen dritten Magnetsensor 23 aufweist, überwacht. Eine dritte Werkzeugkupplung 27 wird mit Hilfe eines Sensors 37, der als vierter Magnetsensor 24 ausgestaltet sein kann, überwacht. Der vierte Magnetsensor 24 ist einem vierten Magnetschalter 34 zugeordnet, mit dem ein vollständiges Verschließen der dritten Werkzeugkupplung 27 überwacht wird. Die Magnetschalter 11, 12, 33-36 bzw. die Magnetsensoren 21-26 sind so beschaffen bzw. an den jeweiligen Werkzeugkupplungen 17, 18, 27 derart angeordnet, dass sie erst dann betätigt werden können, wenn eine von diesem Magnetschalter 11, 12, 33-36 zu überwachende Schnittstelle 30 vollständig funktionstüchtig, abgesichert bzw. verschlossen ist. Das Küchengerät 1 weist ein Gerätegehäusedeckel 29 auf, mit dem das Gerätegehäuse 2 geöffnet werden kann. Auch der Gerätegehäusedeckel 29 wird mit Hilfe eines Magnetschalters 36 und eines sechsten Magnetsensors 26 überwacht. Die erste Werkzeug kupplung 15 ist dazu geeignet und bestimmt, einen Mixerbehälter 7 sicher aufzunehmen. Ein Werkzeugtypsensor 40 an dem Küchengerät 1 erfasst den Typ des eingesetzten Werkzeugs 17 und eine Gerätesteuerung 28 steuert den Elektromotor 3 entsprechend an, wobei insbesondere die Geschwindigkeit des Werkzeugs 17 geeignet gewählt wird. Ein fünfter Magnetsensor 25 überwacht als Teil eines weiteren Magnetschalters 35 die Schnittstelle 30, welche zur Aufnahme einer Getreidemühle (nicht dargestellt) geeignet ist. Durch die Verwendung der Vielzahl von Magnetschaltern 11, 12, 33-36 bzw. der Magnetsensoren 21-26 wird ein Betriebszustand des Küchengeräts 1 sicherheitstechnisch und funktionstechnisch im Wesentlichen vollständig erfasst. Die Magnetsensoren 21-26 sind als Reed-Sensoren vorgesehen.

Fig. 2 zeigt einen Mixerbehälter 7 des erfindungsgemäßen Küchengeräts 1 im Längsschnitt mit einem Behältergriff 8. Mit Hilfe eines in dem Behältergriff 8 zwischen einer ersten und einer zweiten Position hin- und her beweglichen Gestänges 9, welches als Koppelstange 10 ausgestaltet ist, wird die Schnittstelle 30 an einem Behälterdeckel 6 überwacht, indem das Gestänge 9 bei ordnungsgemäß eingesetztem Behälterdeckel 6 auf einen zweiten Schaltschieber 14 drückt, der dadurch in einen Zwischenraum 38 zwischen einem zweiten Magnetsensor 22 und einen am Mixerbehälter 7 angeordneten zweiten Magneten 32 geschoben wird. Der zweite Schaltschieber 14 ist aus einem ferromagnetischen Material gefertigt und lenkt das von dem zweiten Magneten 32 erzeugte magnetische Feld auf den zweiten Magnetsensor 22, der dann ein entsprechendes Signal an die Gerätesteuerung 28 liefert. Der Schaltschieber 14 kann ein quaderförmiger Block aus Eisen sein. An der ersten Werkzeugkupplung 15 ist darüber hinaus ein erster Magnetschalter 11 angeordnet, mit dem ein ordnungsgemäßes Einsetzen des Mixerbehälters 7 in die erste Werkzeugkupplung 15 überwacht wird, indem ein erster Schaltschieber in einen Zwischenraum 38 zwischen einem ersten Magnetsensor 21 und einem ersten Magnet 31 eingeschoben wird, so dass das von dem ersten Magnet 31 erzeugte Magnetfeld auf den ersten Magnetsensor gelenkt wird, so dass dieser ein ordnungsgemäßes Verbinden des Mixerbehälters 7 mit der ersten Werkzeugkupplung 15 anzeigt. Der erste Magnetschalter 11 weist eine Vertiefung 41 auf, in welche der erste Schaltschieber 13 eingreifen muss, um den ersten Magnetschalter 11 zu betätigen. Der Behälterdeckel 6 gelangt an einem deckelseitigen Ende 20 des Gestänges 9 mit dem Gestänge 9 in mechanischen Eingriff. Das Gestänge 9 bewegt sich entlang einer Bewegungsrichtung 42 zwischen einer ersten und einer zweiten Position hin und her und positioniert somit einen zweiten Schaltschieber 14 eines zweiten Magnetschalters 12 in einen Zwischenraum 38 zwischen einem zweiten Magnet 32 und einem zweiten Magnetsensor 22. Der zweite Magnetschalter 12 ist an der Schnittstelle 30 angeordnet.

Fig. 3 zeigt einen Mixerbehälter 7 ohne Behälterdeckel 6 im Längsschnitt. Man erkennt, dass der zweite Schaltschieber nicht in dem Zwischenraum 38 angeordnet ist, so dass der zweite Magnetschalter 12 mit dem zweiten Magnetsensor 22 und dem zweiten Magnet 32 nicht geschlossen ist. Folglich kann das Küchengerät 1 nicht in Betrieb genommen werden. Ein vierter Magnetschalter 34 weist einen Magneten 32 auf, der den ersten Magnetsensor 21 bei einem ordnungsgemäß in die Werkzeug kupplung 15 eingesetzten Mixerbehälter 7 betätigt. Ein weiterer Magnetschalter 33 ist an der ersten Werkzeugkupplung 15 vorgesehen. Der weitere Magnetsensor umfasst eine Vertiefung 41, in der ein dritter Magnetsensor 23 angeordnet ist und in die der zugeordnete zweite Magnet 32 eingreift. Durch die Vertiefung wird der dritte Magnetsensor 23 von dem Einfluss von externen Magneten (nicht dargestellt) geschützt, da diese hierdurch von dem dritten Magnetsensor 23 hinreichend weit beabstandet werden. Hierdurch wird die Sicherheit der Überwachung und die Funktionszuverlässigkeit der Sicherheitsregelung 5 weiter gesteigert.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:
Ein besonders vorteilhaftes Küchengerät 1, insbesondere elektromotorisches Küchengerät 1, vorzugsweise elektromotorische Solo- oder Universalküchenmaschine, umfasst einen Einschalter 4 und eine dem Einschalter 4 zugeordnete Sicherheitsverriegelung 5, die den Einschalter 4 nur dann entriegelt und einen Betrieb des Küchengeräts 1 zulässt, wenn das Küchengerät 1 ordnungsgemäß zusammengebaut ist, wobei die Sicherheitsverriegelung 5 mindestens einen Magnetschalter 11, 12, 33 - 36 mit mindestens einem Magneten 31, 32 und mindestens einem Magnetsensor 21 - 26 aufweist, und ist **dadurch gekennzeichnet, dass** der Magnetsensor 21 - 26 einen Reed-Sensor umfasst. Ein weiteres besonders vorteilhaftes Küchengerät 1, insbesondere elektromotorisches Küchengerät 1, vorzugsweise elektromotorische Solo- oder Universalküchenmaschine, umfasst einen Einschalter 4 und eine dem Einschalter 4 zugeordnete Sicherheitsverriegelung 5, die den Einschalter 4 nur dann entriegelt und einen Betrieb des Küchengeräts 1 zulässt, wenn das Küchengerät 1 ordnungsgemäß zusammengebaut ist, wobei die Sicherheitsverriegelung 5 mindestens einen Magnetschalter 11, 12, 33 - 36 mit mindestens einem Magneten 31, 32 und mindestens einem Magnetsensor 21 - 26 aufweist, **dadurch gekennzeichnet, dass** der Magnetschalter 11, 12, 33 - 36 einen weichmagnetisierbaren, insbesondere ferromagnetischen, Schaltschieber 13, 14 aufweist, mit dem ein von dem Magnetsensor 21 - 26 zu erfassendes Magnetfeld beeinflusst, insbesondere an dem Magnetsensor 21 - 26 konzentriert oder von dem Magnetsensor 21 - 26 abgeschirmt, werden kann. In einer Weiterbildung ist der Schaltschieber 13, 14 zwischen einer ersten Schieberposition und einer zweiten Schieberposition hin und her beweglich, derart, dass im ordnungsgemäß zusammengebauten Zustand des Küchengeräts 1 der Schaltschieber 13, 14 in einem Zwischenraum 38 zwischen dem Magneten 31, 32 und dem Magnetsensor 21 - 26 und sonst außerhalb des Zwischenraums 38 angeordnet ist. Vorteilhafterweise beträgt das Volumen des Zwischenraums 38 weniger als 3 cm³, insbesondere weniger als 2 cm³, vorzugsweise weniger als 1 cm³, und/oder mehr als 0,1 cm³, insbesondere mehr als 0,3 cm³. In einer weiteren Ausgestaltung weist das Küchengerät 1 mindestens ein ansteckbares Werkzeug 7, 17, 18, 39, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse, Fleischwolf, und/oder ein Mixerbehälter 7, auf, das mit mindestens einer Werkzeugkupplung 15, 16, 27 mit dem Küchengerät 1 verbindbar ist, wobei an der Werkzeugkupplung 15, 16, 27 ein erster Magnetschalter 11 mit einem ersten Magnetsensor 21 für die Überwachung einer ordnungsgemäßen Verbindung des Werkzeugs 17, 18 mit dem Küchengerät 1 vorgesehen ist. In einer Weiterbildung weist der erste Magnetschalter 11 einen ersten Magnet 31 und einen magnetisierbaren, insbesondere weichmagnetisierbaren, vorzugsweise ferromagnetischen, ersten Schaltschieber 13 auf, mit dem ein von dem ersten Magnetsensor 21 zu erfassendes erstes Magnetfeld beeinflusst werden kann, wobei der erste Magnet 31 küchengerätseitig und der erste Schaltschieber 13 werkzeugseitig an der Werkzeugkupplung 15, 16, 27 angebracht ist. In einer weiteren Weiterbildung weist der erste Magnetschalter 11 einen ersten Magnet 31 auf, der werkzeugseitig an der Werkzeugkupplung 15, 16, 27 angebracht ist. Vorteilhafterweise ist das Werkzeug 17 ein Mixerbehälter 7, der einen Behälterdeckel 6 aufweist, und ein zweiter Magnetschalter 12 mit einem zweiten Magnetsensor 22 ist für die Überwachung eines ordnungsgemäßen Schließens des Mixerbehälters 7 mit dem Behälterdeckel 6 vorgesehen. In einer Ausgestaltung ist an dem Mixerbehälter 7, insbesondere in einem an dem Mixerbehälter 7 vorgesehenen Behältergriff 8, ein zwischen einer ersten Position und einer zweiten Position hin und her bewegliches Gestänge 9, insbesondere eine Koppelstange 10, vorgesehen, welches derart mit dem Behälterdeckel 6 in Eingriff gelangt, dass das Gestänge 9 bei ordnungsgemäß geschlossenem Behälterdeckel 6 die erste Position und sonst die zweite Position einnimmt, wobei mit Hilfe des Gestänges 9 der zweite Magnetschalter 12 betätigbar ist. Insbesondere weist der zweite Magnetschalter 12 einen zweiten Magnet 32 und einen magnetisierbaren, insbesondere weichmagnetisierbaren, vorzugsweise ferromagnetischen, zweiten Schaltschieber 14 auf, mit dem ein von dem zweiten Magnetsensor 22 zu erfassendes zweites Magnetfeld beeinflusst werden kann, insbesondere an dem zweiten Magnetsensor 22 konzentriert oder von dem zweiten Magnetsensor 22 abgeschirmt, wobei der zweite Schaltschieber 14 insbesondere an dem Mixerbehälter 7 vorgesehen ist. In einer Weiterbildung ist der zweite Schaltschieber 14 an dem der Werkzeugkupplung 15 zugewandten Ende 19 des Gestänges 9 angeordnet. Insbesondere ist der zweite Magnet 32 an dem Mixerbehälter 7 vorgesehen. In einer weiteren Ausgestaltung ist der zweite Magnetsensor 22 an dem der Werkzeugkupplung 15 zugewandten Ende 19 des Gestänges 9 angeordnet. In einer Ausführungsform ist der zweite Magnetsensor 22 an dem deckelseitigen Ende 20 des Gestänges 9 angeordnet. In einer weiteren Ausführungsform werden mit Hilfe mindestens eines Schaltschiebers 13, 14 eine mehrzahlige Anzahl von Sicherheitsüberprüfungen mit einer geringen Anzahl von Magnetschalter 11, 12, 33 - 36, insbesondere mit Hilfe eines Schaltschiebers 13, 14 mindestens zwei Sicherheitsüberprüfungen mit nur einem Magnetschalter 11, 12, 33 - 36, durchgeführt. In einer bevorzugten Ausführungsform ist zur Reduzierung von Störeinflüssen durch externe Magneten eine Vertiefung 41 vorgesehen, in der der Magnetsensor 21 - 26 angeordnet ist und in die der dem Magnetsensor 21-26 zugeordnete Magnet 31, 32 eingreifen kann.

Die Erfindung betrifft ein Küchengerät 1, insbesondere elektromotorisches Küchengerät 1, vorzugsweise elektromotorische Solo- oder Universalküchenmaschine, umfassend einen Einschalter 4 und eine dem Einschalter 4 zugeordnete Sicherheitsverriegelung 5, die nur dann den Einschalter 4 entriegelt und einen Betrieb des Küchengeräts 1 zulässt, wenn das Küchengerät 1 ordnungsgemäß zusammengebaut ist und sieht vor, dass die Sicherheitsverriegelung 5 mindestens vier, vorzugsweise mindestens sechs, separate Magnetschalter 11, 12, 33-36 mit Magnetsensoren 21-26, insbesondere Reed-Sensoren oder Hall-Sensoren, aufweist. Die Erfindung zeichnet sich dadurch aus, dass durch die umfassende Überwachung des Küchengeräts, insbesondere seiner Werkzeugkupplungen 15, 16, 27, ein hohes Maß an Sicherheit bei der Verwendung des Küchengeräts 1 erzielt wird.

### Bezugszeichenliste

- 1: Küchengerät
- 2: Gerätegehäuse
- 3: Elektromotor
- 4: Einschalter
- 5: Sicherheitsverriegelung
- 6: Behälterdeckel
- 7: Mixerbehälter
- 8: Behältergriff
- 9: Gestänge
- 10: Koppelstange
- 11: erster Magnetschalter
- 12: zweiter Magnetschalter
- 13: erster Schaltschieber
- 14: zweiter Schaltschieber
- 15: erste Werkzeugkupplung
- 16: zweite Werkzeugkupplung
- 17: erstes Werkzeug
- 18: zweites Werkzeug
- 19: kupplungsseitiges Ende des Gestänges 9
- 20: deckelseitiges Ende des Gestänges 9
- 21: erster Magnetsensor
- 22: zweiter Magnetsensor
- 23: dritter Magnetsensor
- 24: vierter Magnetsensor
- 25: fünfter Magnetsensor
- 26: sechster Magnetsensor
- 27: dritte Werkzeugkupplung
- 28: Gerätesteuerung
- 29: Gerätegehäusedeckel
- 30: Schnittstelle
- 31: erster Magnet
- 32: zweiter Magnet
- 33- 36: weitere Magnetschalter
- 37: Sensor
- 38: Zwischenraum
- 39: Rührbesen
- 40: Werkzeugtypsensor
- 41: Vertiefung
- 42: Bewegungsrichtung des Gestänges 9

## Patentansprüche

1. Küchengerät (1), insbesondere elektromotorisches Küchengerät (1), vorzugsweise elektromotorische Solo- oder Universalküchenmaschine, umfassend einen Einschalter (4) und eine dem Einschalter (4) zugeordnete Sicherheitsverriegelung (5), die nur dann den Einschalter (4) entriegelt und einen Betrieb des Küchengeräts (1) zulässt, wenn das Küchengerät (1) ordnungsgemäß zusammengebaut ist, **dadurch gekennzeichnet, dass** die Sicherheitsverriegelung (5) mindestens vier, vorzugsweise mindestens sechs, separate Magnetschalter (11, 12, 33 - 36) mit Magnetsensoren (21 - 26) aufweist.

2. Küchengerät (1) nach Anspruch 1, **dadurch gekennzeichnet, dass** mindestens ein Magnetschalter (11, 12, 33 - 36) mit mindestens einem Magnetsensor (21 - 26) vorgesehen ist, wobei der Magnetsensor (21 -26) ein Reed-Sensor ist.

3. Küchengerät (1) nach einem der vorherigen Ansprüche, **dadurch gekennzeichnet, dass** das Küchengerät (1) mindestens einen ansteckbaren Mixerbehälter (7) aufweist, der mit einer ersten Werkzeugkupplung (15) mit dem Küchengerät (1) verbindbar ist, wobei an der ersten Werkzeugkupplung (15) ein erster Magnetsensor (21) für die Überwachung einer ordnungsgemäßen Verbindung des Mixerbehälters (7) mit dem Küchengerät (1) vorgesehen ist.

4. Küchengerät (1) nach Anspruch 3, **dadurch gekennzeichnet, dass** der Mixerbehälter (7) einen Behälterdeckel (6) aufweist, und ein zweiter Magnetsensor (22) für die Überwachung eines ordnungsgemäßen Schließens des Mixerbehälters (7) mit dem Behälterdeckel (6) vorgesehen ist.

5. Küchengerät (1) nach Anspruch 4, **dadurch gekennzeichnet, dass** der zweite Magnetsensor (22) an der ersten Werkzeugkupplung (15), vorzugsweise am Küchengerät (1), angeordnet ist, wobei insbesondere an dem Mixerbehälter (7), insbesondere in einem an dem Mixerbehälter (7) vorgesehenen Behältergriff (8), ein zwischen einer ersten Position und einer zweiten Position hin und her bewegliches Gestänge (9), insbesondere eine Koppelstange (10), vorgesehen ist, welches derart mit dem Behälterdeckel (6) in Eingriff gelangt, dass das Gestänge (9) bei ordnungsgemäß geschlossenem Behälterdeckel (6) die erste Position und sonst die zweite Position einnimmt, wobei mit Hilfe des Gestänges (9) der zweite Magnetsensor (2) betätigbar ist.

6. Küchengerät (1) nach einem der vorherigen Ansprüche, **dadurch gekennzeichnet, dass** das Küchengerät (1) mindestens ein ansteckbares erstes Werkzeug (17), insbesondere ein Pürier-, Misch-, Häcksel-, Knet- und/oder Schneidwerk, Schlag- bzw. Rührbesen (39), Getränkemixer, Durchlaufschnitzler, Getreidemühle, Zitrus- bzw. Fruchtpresse und/oder Fleischwolf, aufweist, das mit einer zweiten Werkzeugkupplung (16) mit dem Küchengerät (1) verbindbar ist, wobei an der zweiten Werkzeugkupplung (16) ein dritter Magnetsensor (23) für die Überwachung einer ordnungsgemäßen Verbindung des ersten Werkzeugs (17) mit dem Küchengerät (1) vorgesehen ist.

7. Küchengerät (1) nach einem der vorherigen Ansprüche, **dadurch gekennzeichnet, dass** das Küchengerät (1) mindestens ein ansteckbares zweites Werkzeug (18), insbesondere ein Pürier-, Misch-, Häcksel-, Knet- und/oder Schneidwerk, Schlag- bzw. Rührbesen (39), Getränkemixer, Durchlaufschnitzler, Getreidemühle, Zitrus- bzw. Fruchtpresse und/oder Fleischwolf, aufweist, das mit einer dritten Werkzeugkupplung (27) mit dem Küchengerät (1) verbindbar ist, wobei an der dritten Werkzeugkupplung (27) ein vierter Magnetsensor (24) für die Überwachung einer ordnungsgemäßen Verbindung des zweiten Werkzeugs (18) mit dem Küchengerät (1) vorgesehen ist.

8. Küchengerät (1) nach einem der vorherigen Ansprüche, **dadurch gekennzeichnet, dass** das Küchengerät (1) mehrere, insbesondere mindestens 3, Werkzeugkupplungen (15, 16, 27) für verschiedene Werkzeuge (17, 18), insbesondere Pürier-, Misch-, Häcksel-, Knet- und/oder Schneidwerke, Mixerbehälter (7) und/oder Fleischwolf, aufweist und jeder Werkzeugkupplung (15, 16, 27) mindestens ein Magnetsensor (21- 26) zugeordnet ist.

9. Küchengerät (1) nach Anspruch 8, **dadurch gekennzeichnet, dass** mindestens ein Magnetsensor (21- 26), insbesondere mindestens 2, vorteilhafterweise ein überwiegender Anteil der, Magnetsensoren (21- 26) den Typ des eingesetzten Werkzeugs (17, 18) identifizieren können.

10. Küchengerät (1) nach Anspruch 9, **dadurch gekennzeichnet, dass** das Küchengerät (1) eine Gerätesteuerung (28) umfasst, welche die Betriebsweise des Küchengeräts (1), insbesondere die Geschwindigkeit und/oder Leistungsstufe eines Elektromotors (3), entsprechend der Identifizierung beeinflusst.

11. Küchengerät (1) nach einem der vorherigen Ansprüche, **dadurch gekennzeichnet, dass** das Küchengerät (1) ein Gerätegehäuse (2) und einen Gerätegehäusedeckel (29) aufweist und ein fünfter Magnetsensor (5) für die Überwachung eines ordnungsgemäßen Schließens des Gerätegehäuses (2) mit dem Gerätegehäusedeckel (29) vorgesehen ist.

12. Küchengerät (1) nach einem der vorherigen Ansprüche, **dadurch gekennzeichnet, dass** die Magnetschalter (11, 12, 33 - 36) bzw. die Magnetsensoren (21 - 26) so beschaffen und/oder angeordnet sind, dass ein Magnetschalter (11, 12, 33 - 36) erst dann betätigt wird, wenn eine von diesem Magnetschalter (11, 12, 33 - 36) zu überwachende Schnittstelle (30) vollständig funktionstüchtig bzw. abgesichert ist.

13. Küchengerät (1) nach einem der vorherigen Ansprüche, **dadurch gekennzeichnet, dass** zur Reduzierung von Störeinflüssen durch externe Magneten der Magnetschalter (11, 12, 33 - 36) eine Vertiefung (41) aufweist, in der der Magnetsensor (21 - 26) angeordnet ist und in die ein Magnet (31, 32) des Magnetschalters (11, 12, 33 - 36) eingreifen kann.

14. Küchengerät (1) nach einem der Ansprüche 1 bis 13, insbesondere elektromotorisches Küchengerät (1), vorzugsweise elektromotorische Solo- oder Universalküchenmaschine, wobei das Küchengerät (1) für mehrere einsetzbare Werkzeuge (7, 17, 18, 39), insbesondere ein Mixerbehälter (7), Pürier-, Misch-, Häcksel-, Knet- und/oder Schneidwerke, Schlag- bzw. Rührbesen (39), Getränkemixer, Durchlaufschnitzler, Getreidemühlen, Zitrus- bzw. Fruchtpressen und/oder Fleischwolf eingerichtet ist**,** wobei eines der Werkzeuge (17, 18) von dem Küchengerät (1) aufnehmbar ist, **dadurch gekennzeichnet, dass** mit Hilfe mindestens zweier Sensoren (37), insbesondere mit Hilfe von Magnetsensoren (21 - 26), der Werkzeugtyp des eingesetzten Werkzeugs (17, 18) identifizierbar ist und die Betriebsweise des Küchengeräts (1), insbesondere die Geschwindigkeit und/oder Leistungsstufe eines Elektromotors (3), entsprechend der Identifizierung beeinflussbar, insbesondere anpassbar, ist.

## Claims

1. Kitchen appliance (1), particularly electric-motor-driven kitchen appliance (1), preferably electric-motor-driven solo or universal food processor, comprising an on-switch (4) and a safety lock (5), which is associated with the on-switch (4) and which unlocks the on-switch (4) and permits operation of the kitchen appliance (1) only when the kitchen appliance (1) is correctly assembled, **characterised in that** the safety lock (5) comprises at least four, preferably at least six, separate magnetic switches (11, 12, 33 - 36) with magnetic sensors (21 - 26).

2. Kitchen appliance (1) according to claim 1, **characterised in that** at least one magnetic switch (11, 22, 33 - 36) is provided with at least one magnetic sensor (21 - 26), wherein the magnetic sensor (21 - 26) is a Reed sensor.

3. Kitchen appliance (1) according to any one of the preceding claims, **characterised in that** the kitchen appliance (1) comprises at least one mixer container (7) which can be plugged on and which is connectible with the kitchen appliance (1) by a first tool coupling (15), wherein a first magnetic sensor (21) for monitoring correct connection of the mixer container (7) with the kitchen appliance (1) is provided at the first tool coupling (15).

4. Kitchen appliance (1) according to claim 3, **characterised in that** the mixer container (7) has a container lid (6) and a second magnetic sensor (22) is provided for monitoring correct closing of the mixer container (7) by the container lid (6).

5. Kitchen appliance (1) according to claim 4, **characterised in that** the second magnetic sensor (22) is arranged at the first tool coupling (15), preferably at the kitchen appliance (1), wherein provided at, in particular, the mixer container (7), particularly in a container handle (8) provided at the mixer container (7), is a linkage (9), particularly a coupling rod (10), which is movable back and forth between a first position and a second position and which comes into engagement with the container lid (6) in such a manner that the linkage (9) adopts the first position when the container lid (6) is correctly closed and otherwise adopts the second position, wherein the second magnetic sensor (2) is actuable with the help of the linkage (9).

6. Kitchen appliance (1) according to any one of the preceding claims, **characterised in that** the kitchen appliance (1) comprises at least one attachable first tool (17), particularly a puréeing, mixing, chopping, kneading and/or cutting mechanism, beating or stirring whisk (39), drink mixer, through shredder, flour mill, citrus or fruit press and/or mincer, which is connectible with the kitchen appliance (1) by a second tool coupling (16), wherein a third magnetic sensor (23) for monitoring correct connection of the first tool (17) with the kitchen appliance (1) is provided at the second tool coupling (16).

7. Kitchen appliance (1) according to any one of the preceding claims, **characterised in that** the kitchen appliance comprises at least one attachable second tool (18), particularly a puréeing, mixing, chopping, kneading and/or cutting mechanism, beating or stirring whisk (39), drink mixer, through shredder, flour mill, citrus or fruit press and/or mincer, which is connectible with the kitchen appliance (1) by a third tool coupling (27), wherein a fourth magnetic sensor (24) for monitoring correct connection of the second tool (18) with the kitchen appliance (1) is provided at the third tool coupling (27).

8. Kitchen appliance (1) according to any one of the preceding claims, **characterised in that** the kitchen appliance (1) comprises several, particularly at least three, tool couplings (15, 16, 27) for different tools (17, 18), particularly puréeing, mixing, chopping, kneading and/or cutting mechanisms, mixer container (7) and/or mincer, and at least one magnetic sensor (21 - 26) is associated with each tool coupling (15, 16, 27).

9. Kitchen appliance (1) according to claim 8, **characterised in that** at least one magnetic sensor (21 - 26), particularly at least two, advantageously the majority of the, magnetic sensors (21 - 26) can identify the type of tool (17, 18) fitted.

10. Kitchen appliance (1) according to claim 9, **characterised in that** the kitchen appliance (1) comprises an appliance control (28) which influences the mode of operation of the kitchen appliance (1), particularly the speed and/or power stage of an electric motor (3), in correspondence with the identification.

11. Kitchen appliance (1) according to any one of the preceding claims, **characterised in that** the kitchen appliance (1) comprises an appliance housing (2) and an appliance housing lid (29) and a fifth magnetic sensor (5) is provided for monitoring correct closing of the appliance housing (2) by the appliance housing lid (29).

12. Kitchen appliance (1) according to any one of the preceding claims, **characterised in that** the magnetic switches (11, 12, 33 - 36) or the magnetic sensors (21 - 26) are so constructed and/or arranged that a magnetic switch (11, 12, 33 - 36) is actuated only when an interface (30) to be monitored by these magnetic switches (11, 12, 33 - 36) is fully functionally capable or secured.

13. Kitchen appliance (1) according to any one of the preceding claims, **characterised in that** the magnetic switch (11, 12, 33 - 36) has, for reducing disturbing influences due to external magnets, a recess (41) in which the magnetic sensor (21 - 26) is arranged and in which a magnet (31, 32) of the magnetic switch (11, 12, 33 - 36) can engage.

14. Kitchen appliance (1) according to any one of claims 1 to 13, particularly electric-motor-driven kitchen appliance (1), preferably electric-motor-driven solo or universal food processor, wherein the kitchen appliance (1) is equipped for several insertable tools (7, 17, 18, 39), particularly a mixer container (7), puréeing, mixing, chopping, kneading and/or cutting mechanism, beating or stirring whisk (39), drink mixer, through shredder, flour mill, citrus or fruit press and/or mincer, wherein one of the tools (17, 18) is receivable by the kitchen appliance (1), **characterised in that** with the help of at least two sensors (37), particularly with the help of magnetic sensors (21 - 26), the tool type of the inserted tool (17, 18) is identifiable and the mode of operation of the kitchen appliance (1), particularly the speed and/or power stage of an electric motor (3), can be influenced, in particular adapted, in correspondence with the identification.

## Revendications

1. Robot ménager (1), notamment robot ménager à moteur électrique (1), de préférence appareil ménager à moteur électrique, individuel ou universel, comprenant un interrupteur (4) et un verrouillage de sécurité (5) associé à l'interrupteur (4), ce verrouillage de sécurité déverrouillant l'interrupteur (4) et permettant un fonctionnement du robot ménager (1) seulement lorsque le robot ménager (1) est assemblé correctement, **caractérisé en ce que** le verrouillage de sécurité (5) présente au moins quatre, de préférence au moins six, interrupteurs magnétiques séparés (11, 12, 33 - 36), munis de capteurs magnétiques (21 - 26).

2. Robot ménager (1) selon la revendication 1, **caractérisé en ce qu'**au moins un interrupteur magnétique (11, 12, 33 - 36) muni d'au moins un capteur magnétique (21 - 26) est ménagé, le capteur magnétique (21 - 26) étant un capteur Reed.

3. Robot ménager (1) selon l'une quelconque des revendications précédentes, **caractérisé en ce que** le robot ménager (1) présente au moins un récipient mélangeur enfichable (7), qui est raccordable au robot ménager (1) à l'aide d'un premier accouplement d'outil (15), un premier capteur magnétique (21) pour le contrôle d'un raccordement correct du récipient mélangeur (7) au robot ménager (1) étant prévu sur le premier accouplement d'outil (15).

4. Robot ménager (1) selon la revendication 3, **caractérisé en ce que** le récipient mélangeur (7) présente un couvercle (6) de récipient et **en ce qu'**un deuxième capteur magnétique (22) est prévu pour le contrôle d'une fermeture correcte du récipient mélangeur (7) avec le couvercle du récipient (6).

5. Robot ménager (1) selon la revendication 4, **caractérisé en ce que** le deuxième capteur magnétique (22) est disposé sur le premier accouplement d'outil (15), de préférence sur le robot ménager (1), une tringlerie (9) déplaçable entre une première position et une seconde position, notamment une tige de couplage (10), étant prévue notamment sur le récipient mélangeur (7), notamment dans une poignée du récipient (8) prévue sur le récipient mélangeur (7), cette tringlerie venant en prise avec le couvercle (6) du récipient de telle manière que la tringlerie (9), lorsque le couvercle (6) du récipient est fermé correctement, prend la première position et sinon la seconde position, le deuxième capteur magnétique (22) étant actionnable à l'aide de la tringlerie (9).

6. Robot ménager (1) selon l'une quelconque des revendications précédentes, **caractérisé en ce que** le robot ménager (1) présente au moins un premier outil enfichable (17), notamment un outil pour réduire en purée, mélanger, hacher, pétrir et/ou couper, un fouet batteur resp. un fouet mélangeur (39), un mixeur de boisson, un trancheur, un moulin à céréales, un presse-citron resp. presse-agrumes et/ou un hachoir à viande, qui est raccordable au robot ménager (1) à l'aide d'un deuxième accouplement d'outil (16), un troisième capteur magnétique (23) étant prévu sur le deuxième accouplement d'outil (16) pour le contrôle d'un raccordement correct du premier outil (17) au robot ménager (1).

7. Robot ménager (1) selon l'une quelconque des revendications précédentes, **caractérisé en ce que** le robot ménager (1) présente au moins un deuxième outil enfichable (18), notamment un outil pour réduire en purée, mélanger, hacher, pétrir et/ou couper, un fouet batteur resp. un fouet mélangeur (39), un mixeur de boisson, un trancheur, un moulin à céréales, un presse-citron resp. presse-agrumes et/ou un hachoir à viande, qui est raccordable au robot ménager (1) à l'aide d'un troisième accouplement d'outil (27), un quatrième capteur magnétique (24) étant prévu sur le troisième accouplement d'outil (27) pour le contrôle d'un raccordement correct du deuxième outil (18) au robot ménager (1).

8. Robot ménager (1) selon l'une quelconque des revendications précédentes, **caractérisé en ce que** le robot ménager (1) présente plusieurs, notamment au moins 3, accouplements d'outils (15, 16, 27), pour différents outils (17, 18), notamment des outils pour réduire en purée, mélanger, hacher, pétrir et/ou couper, un récipient mélangeur (7) et/ou un hachoir à viande, et **en ce qu'**au moins un capteur magnétique (21 - 26) est associé à chaque accouplement d'outil (15, 16, 27).

9. Robot ménager (1) selon la revendication 8, **caractérisé en ce qu'**au moins un, notamment au moins 2, capteurs magnétiques (21 - 26), de manière avantageuse une majeure partie des capteurs magnétiques (21 - 26), peuvent identifier le type de l'outil utilisé (17, 18).

10. Robot ménager (1) selon la revendication 9, **caractérisé en ce que** le robot ménager (1) comprend une commande d'appareil (28), laquelle influence le mode de fonctionnement du robot ménager (1), notamment la vitesse et/ou le niveau de puissance d'un moteur électrique (3), de manière correspondant à l'identification.

11. Robot ménager (1) selon l'une quelconque des revendications précédentes, **caractérisé en ce que** le robot ménager (1) présente un boîtier d'appareil (2) et un couvercle (29) de boîtier d'appareil et **en ce qu'**un cinquième capteur magnétique (6) est prévu pour le contrôle d'une fermeture correcte du boîtier d'appareil (2) avec le couvercle (29) du boîtier d'appareil.

12. Robot ménager (1) selon l'une quelconque des revendications précédentes, **caractérisé en ce que** les interrupteurs magnétiques (11, 12, 33 - 36) resp. les capteurs magnétiques (21 - 26) sont réalisés et/ou disposés de manière à ce qu'un interrupteur magnétique (11, 12, 33 - 36) soit actionné seulement lorsqu'une interface (30) à surveiller par cet interrupteur magnétique (11, 12, 33 - 36) est complètement en état de fonctionner resp. lorsqu'elle est complètement protégée.

13. Robot ménager (1) selon l'une quelconque des revendications précédentes, **caractérisé en ce que**, pour réduire les influences perturbatrices dues à des aimants externes, l'interrupteur magnétique (11, 12, 33 - 36) présente un approfondissement (41), dans lequel est disposé le capteur magnétique (21 - 26) et dans lequel un aimant (31, 32) de l'interrupteur magnétique (11, 12, 33 - 36) peut avoir prise.

14. Robot ménager (1) selon l'une quelconque des revendications 1 à 13, notamment robot ménager à moteur électrique (1), de préférence appareil ménager à moteur électrique, individuel ou universel, le robot ménager (1) étant aménagé pour plusieurs outils insérables (7, 17, 18, 39), notamment un récipient mélangeur (7), des outils pour réduire en purée, mélanger, broyer, pétrir et/ou couper, un fouet batteur resp. un fouet mélangeur (39), un mélangeur de boisson, un trancheur, un moulin à céréales, un presse-citron resp. presse-agrumes et/ou un hachoir à viande, un des outils (17, 18) pouvant être reçu par le robot ménager (1), **caractérisé en ce qu'**à l'aide d'au moins deux capteurs (37), notamment à l'aide de capteurs magnétiques (21 - 26), le type d'outil de l'outil utilisé (17, 18) est identifiable, et **en ce que** le mode de fonctionnement du robot ménager (1), notamment la vitesse et/ou le niveau de puissance d'un moteur électrique (3), est influençable, notamment adaptable, selon l'identification.
